(19) Europäisches Patentamt
European Patent Office
Office européen des brevets

(11) EP 0 888 920 A2

## (12) EUROPÄISCHE PATENTANMELDUNG

(43) Veröffentlichungstag:
07.01.1999 Patentblatt 1999/01

(51) Int. Cl.⁶: **B60K 25/02**, B60K 23/00

(21) Anmeldenummer: 98110312.0

(22) Anmeldetag: 05.06.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 04.07.1997 DE 19728723

(71) Anmelder:
**Bayerische Motoren Werke Aktiengesellschaft**
**80788 München (DE)**

(72) Erfinder: **Fröschl, Joachim**
**82211 Herrsching (DE)**

(54) **Antriebsaggregat für Kraftfahrzeuge**

(57) Ein Antriebsaggregat für Kraftfahrzeuge besteht aus einer Brennkraftmaschine, aus einer von der Brennkraftmaschine angetriebenen Motorwelle, aus einem mit der Motorwelle verbundenen Getriebe und aus mindestens einem Nebenaggregat, das über das Getriebe von der Motorwelle zumindest indirekt antreibbar ist. Ein erstes Nebenaggregat weist eine elektronische Steuereinheit auf, durch die zumindest die Ist-Drehzahl des ersten Nebenaggregats erfaßt wird und durch die das Getriebe in Abhängigkeit von dieser Ist-Drehzahl und einer vorgegebenen Soll-Drehzahl zumindest eines der Nebenaggregate angesteuert wird.

EP 0 888 920 A2

**Beschreibung**

Die Erfindung bezieht sich auf ein Antriebsaggregat für Kraftfahrzeuge nach dem Oberbegriff des Patentanspruchs 1.

Ein derartiges Antriebsaggregat ist beispielsweise aus der DE 43 30 622 A1 bekannt. Dieses bekannte Antriebsaggregat weist insbesondere ein Getriebe bzw. einen Variator zum Antrieb von Nebenaggregaten durch eine Brennkraftmaschine auf. Derartige Nebenaggregate sind beispielsweise ein Generator, eine Kühlmittelpumpe, ein Klimakompressor oder eine Lenkhilfepumpe. Derartige Nebenaggregate werden üblicherweise über Keilriemen oder Kettentriebe direkt von der Motor- bzw. Kurbelwelle angetrieben. Die Brennkraftmaschinendrehzahl bzw. die Drehzahl der Motorwelle ist beim Betrieb eines Kraftfahrzeugs sehr unterschiedlich und kann je nach Betriebszustand beispielsweise zwischen 800 und 8000 Umdrehungen pro Minute liegen. Die Nebenaggregate werden daher üblicherweise so ausgelegt, daß sie bereits bei niedrigen Brennkraftmaschinendrehzahlen bzw. Drehzahlen der Motorwelle die geforderte Leistung erbringen und zusätzlich der jeweils maximalen Drehzahl standhalten. Dies hatte zur Folge, daß die Nebenaggregate überdimensioniert werden. Dies führt zu hohen Herstellungskosten und zu einem hohen Gewicht der Nebenaggregate. Um diesen Nachteil zumindest teilweise zu beseitigen, wird bei dem Antriebsaggregat nach der DE 43 30 622 A1 ein steuerbares Getriebe (Variator) mit besonderer konstruktiver Ausgestaltung vorgesehen, durch das eine Entkoppelung der jeweiligen Drehzahl der Nebenaggregate von der Brennkraftmaschinendrehzahl bzw. der Drehzahl der Motorwelle zumindest innerhalb vorgegebener Grenzen ermöglicht wird. Die Ausgestaltung des Antriebsaggregats nach der DE 43 30 622 A1 betrifft insbesondere den konstruktiven Aufbau dieses Getriebes (Variators) im Detail. In der DE 43 30 622 A1 wird jedoch nicht näher auf die elektronische Vorrichtung und die Strategie zur Steuerung des Getriebes (Variators) eingegangen.

Es ist Aufgabe der Erfindung, ein Antriebsaggregat für Kraftfahrzeuge eingangs genannter Art derart zu verbessern, daß die Dimensionen der Nebenaggregate minimiert und die Funktionen der Nebenaggregate optimiert werden.

Diese Aufgabe wird durch die kennzeichnenden Merkmale des Patentanspruchs 1 gelöst.

Vorteilhafte Weiterbildungen der Erfindung sind die Gegenstände der Unteransprüche.

Erfindungsgemäß weist zumindest ein erstes Nebenaggregat, vorzugsweise der Generator zur Stromerzeugung in Kraftfahrzeugen, eine elektronische Steuereinheit auf, durch die zumindest die Ist-Drehzahl dieses ersten Nebenaggregats erfaßt wird und durch die das Getriebe zwischen der Brennkraftmaschine und den Nebenaggregaten in Abhängigkeit von dieser Ist-Drehzahl und einer vorgegebenen Soll-Drehzahl zumindest eines der Nebenaggregate angesteuert wird.

Vorzugsweise ist das Getriebe im wesentlichen kontinuierlich von einem unteren Anschlag zu einem oberen Anschlag verstellbar. Die Steuereinheit des ersten Nebenaggregats kann eine Speichereinheit aufweisen, in der Daten gespeichert sind, durch die nach Erfassung der Ist-Drehzahl des ersten Nebenaggregats auch auf die Ist-Drehzahl anderer Nebenaggregate schließen kann. Darüber hinaus können durch diese Speichereinheit auch betriebs- bzw. lastabhängige Soll-Drehzahlen sowohl des ersten Nebenaggregats als auch anderer Nebenaggregate vorgegeben werden.

In einer Weiterbildung der Erfindung ist zwischen der Steuereinheit des ersten Nebenaggregats und dem Brennkraftmaschinensteuergerät eine Datenleitung angeordnet, über die insbesondere die Drehzahl der Motorwelle bzw. die Brennkraftmaschinendrehzahl und Betriebsinformationen anderer Nebenaggregate übermittelt werden.

Dem erfindungsgemäßen Antriebsaggregat liegt vorzugsweise folgende Steuerstrategie zugrunde:

Aus Gründen der Kraftstoffverbrauchsminimierung und der Verschleißminimierung der Nebenaggregate soll durch die Ansteuerung des Getriebes die jeweilige Drehzahl der Nebenaggregate so niedrig wie möglich sein. Andererseits sollen die Drehzahlen der Nebenaggregate so hoch sein, daß die Lastanforderungen bzw. die geforderte Leistung an jedes Nebenaggregat erfüllt werden. Darüber hinaus soll keine der maximal zulässigen Drehzahlen eines Nebenaggregats überschritten werden.

Durch dieses erfindungsgemäße Antriebsaggregat werden einerseits die geforderte Leistung an die Nebenaggregate bestmöglich erfüllt und andererseits die Lebensdauer der Nebenaggregate erhöht sowie die Abgasemissionen minimiert.

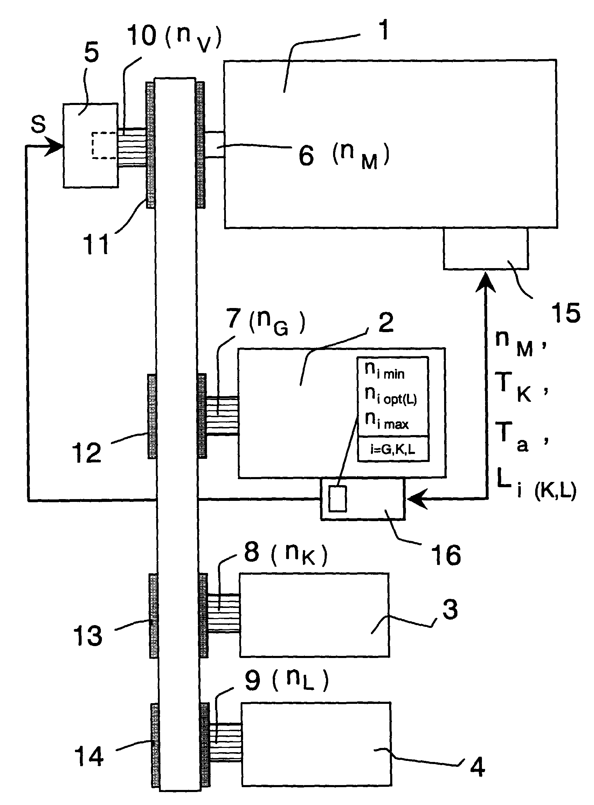

In der Zeichnung ist ein Ausführungsbeispiel der Erfindung dargestellt. Sie zeigt ein erfindungsgemäßes Antriebsaggregat bestehend aus einer Brennkraftmaschine, drei Nebenaggregaten und einem zwischen der Brennkraftmaschine und den Nebenaggregaten angeordneten Getriebe.

Eine Brennkraftmaschine 1 ist über eine Motorwelle 6 mit einem Getriebe 5, das vorzugsweise kontinuierlich variabel ist, antriebsmäßig verbunden. Das Getriebe 5 treibt über eine Getriebeausgangswelle 10 ein Zahnrad oder eine Riemenscheibe 11 an. Ein erstes Nebenaggregat 2 in Form eines Generators, ein zweites Nebenaggregat 3 in Form eines Klimakompressors und ein drittes Nebenaggregat 4 in Form einer Lenkhilfepumpe sind jeweils über eine Eingangswelle 7, 8 und 9 mit Zahnräder oder Riemenscheiben 12, 13 und 14 verbunden. Die Nebenaggregate 2, 3 und 4 werden über die Zahnräder oder Riemenscheiben 12, 13 und 14 mittels einer Zahnradkette oder eines Keilriemens von dem Zahnrad oder der Riemenscheibe 11 angetrieben.

Die Motorwelle 6 dreht sich mit einer Drehzahl $n_M$, die Getriebeausgangswelle 10 dreht sich mit einer Drehzahl $n_V$ und die Eingangswellen 7, 8 und 9 drehen sich jeweils mit den Drehzahlen $n_G$, $n_K$ sowie $n_L$. Das Getriebe 5 kann bzgl. der Motorwellendrehzahl $n_M$ und der Getriebeausgangswellen-Drehzahl $n_V$ sowohl ein Übersetzungs- als auch ein Untersetzungs-Verhältnis erzeugen. Durch die Wahl des jeweiligen Durchmessers der Zahnräder bzw. Riemenscheiben 11, 12, 13 und 14 ist jedem Verlauf der Getriebeausgangswellen-Drehzahl $n_V$ ein fester Verlauf der Generator-Drehzahl $n_G$, der Klimakompressor-Drehzahl $n_K$ und der Lenkhilfenpumpen-Drehzahl $n_L$ zugeordnet. Der minimal möglichen Drehzahl $n_V$ der Getriebeausgangswelle 10, die beispielsweise durch einen unteren Anschlag der Untersetzung des Getriebes 5 und durch die momentane Motorwellen-Drehzahl $n_M$ vorgegeben ist, ist jeweils eine minimal mögliche Drehzahl $n_{i\,min}$ (i=G, K, L) zugeordnet. Es ist sicherzustellen, daß die absolute maximal zulässige Drehzahl $n_{i\,max}$ des jeweiligen Nebenaggregats 2, 3 und 4 bei maximal möglicher Drehzahl $n_M$ der Motorwelle und dabei minimal möglicher Drehzahl $n_V$ der Getriebeausgangswelle 10 nicht überschritten werden. Dies wird durch die mechanische Auslegung des gesamten Antriebsaggregats ermöglicht.

Der Brennkraftmaschine 1 ist in üblicher Weise ein elektronisches Brennkraftmaschinensteuergerät 15 zugeordnet. Erfindungswesentlich ist die Anordnung einer elektronischen Steuereinheit 16 an einem ersten Nebenaggregat, hier dem Generator 2. Durch die elektronische Steuereinheit 16 des Generators 2 wird das Getriebe 5 mittels eines Steuersignals S angesteuert. Darüber hinaus besteht zwischen dem Brennkraftmaschinensteuergerät 15 und der Steuereinheit 16 des Generators 2 eine Datenleitung. Über diese Datenleitung erhält die elektronische Steuereinheit 16 vorzugsweise folgende Datensignale: Die Drehzahl $n_M$ der Motorwelle 6, die Kühlmitteltemperatur $T_K$, die Außentemperatur $T_a$ und eine drehzahlrelevante Betriebsinformation in Form einer Lastanforderung $L_i$, insbesondere der übrigen Nebenaggregate, nämlich des Klimakompressors 3 ($L_K$) und der Lenkhilfepumpe 4 ($L_L$). Die Lastanforderung $L_i = L_G$ des Generators 2 kann die Steuereinheit 16 selbst ermitteln. Durch die Steuereinheit 16 wird auch die Ist-Drehzahl $n_G$ des Generators 2 erfaßt. Weiterhin weist die Steuereinheit 16 eine Speichereinheit auf, in der beispielsweise die lastanforderungsabhängigen optimalen Drehzahlen $n_{i\,opt(L)}$ und die maximal zulässigen Drehzahlen $n_{i\,max}$ sämtlicher Nebenaggregate 2, 3 und 4 abgelegt sind. Alternativ könnten jedoch diese Drehzahlwerte der Nebenaggregate 3 und 4 auch über die Datenleitung übermittelt werden.

Folgende Steuerstrategie wird vorzugsweise durch die Steuereinheit 16 durchgeführt:

Ist die Lastanforderung $L_i$ der Nebenaggregate 2, 3 und 4 gleich Null, d. h. wird keine Leistung von den Nebenaggregaten gefordert, werden die minimal möglichen Drehzahlen $n_{i\,min}$ der Nebenaggregate 2, 3 und 4, die jedoch von der Brennkraftmaschinendrehzahl bzw. der Drehzahl $n_M$ der Motorwelle 6 abhängen, eingestellt. Dies bedeutet, daß die Steuereinheit 16 ein Steuersignal S ausgibt, wodurch über das Getriebe 5 die minimal mögliche Drehzahl $n_V$ der Getriebeausgangswelle 10, insbesondere die höchste Untersetzung oder die niedrigste Übersetzung, eingestellt wird. Liegt jedoch eine Lastanforderung $L_i$ zumindest eines Nebenaggregates vor, findet in der Steuereinheit 16 eine Maximalauswahl aus den lastanforderungsabhängigen optimalen Drehzahlen $n_{i\,opt(L)}$ statt. Sind beispielsweise die Lastanforderungen des Klimakompressors 3 und der Lenkhilfepumpe 4 gleich Null, und liegt eine Lastanforderung $L_G$ des Generators 2 vor, wird das Steuersignal S derart ausgegeben, daß sich über die Drehzahl $n_V$ der Getriebeausgangswelle 10 die von der Lastanforderung $L_G$ abhängige optimale Drehzahl $n_{G\,opt(L)}$ des Generators 2 einstellt. Hierdurch ergeben sich automatisch bestimmte Drehzahlen $n_K$ und $n_L$ des Klimakompressors 3 und der Lenkhilfepumpe 4, die jedoch nicht größer als deren maximal zulässigen Drehzahlen $n_{K\,max}$ bzw. $n_{L\,max}$ sind. Würde nur eine der maximal zulässigen Drehzahlen $n_{K\,max}$ oder $n_{L\,max}$ überschritten werden, würde die Steuereinheit 16 über das Steuersignal S die Drehzahl $n_V$ solange reduzieren, bis keine der maximal zulässigen Drehzahlen mehr überschritten ist.

Liegen beispielsweise Lastanforderungen $L_G$, $L_K$ und $L_L$ vor, wird die maximale der lastanforderungsabhängigen optimalen Drehzahlen $n_{G\,opt(L)}$, $n_{K\,opt(L)}$ und $n_{L\,opt(L)}$ eingestellt werden, vorausgesetzt keine der maximal zulässigen Drehzahlen $n_{E\,max}$, $n_{K\,max}$ oder $n_{L\,max}$ wird überschritten.

Durch dieses erfindungsgemäße Ausführungsbeispiel wird deutlich, daß einerseits durch die Einstellung minimal möglicher Drehzahlen der Kraftstoffverbrauch und der Verschleiß reduziert wird und andererseits durch die Einstellung maximal zulässiger bzw. maximaler lastanforderungsabhängiger optimaler Drehzahlen die optimale Funktionsfähigkeit der Nebenaggregate sichergestellt wird.

## Patentansprüche

1. Antriebsaggregat für Kraftfahrzeuge bestehend aus einer Brennkraftmaschine (1), aus einer von der Brennkraftmaschine (1) angetriebenen Motorwelle (6), aus einem mit der Motorwelle (6) verbundenen Getriebe (5) und aus mindestens einem Nebenaggregat (2, 3, 4), das über das Getriebe (5) von der Motorwelle (6) zumindest indirekt antreibbar ist, dadurch gekennzeichnet, daß ein erstes Nebenaggregat (2) eine elektronische Steuereinheit (16) aufweist, durch die zumindest die Ist-Drehzahl ($n_G$) des ersten Nebenaggregats (2) erfaßt wird und durch die das Getriebe (5) in Abhängigkeit von dieser Ist-Drehzahl ($n_G$) und einer vorgegebenen Soll-Drehzahl ($n_{i\,min}$, $n_{i\,opt(L)}$ oder $n_{i\,max\,;\,(i=G,\,K\,oder\,L)}$)

zumindest eines der Nebenaggregate (2, 3, 4) angesteuert wird.

2. Antriebsaggregat nach Patentanspruch 1, dadurch gekennzeichnet, daß die Steuereinheit (16) des ersten Nebenaggregats (2) über eine Datenleitung mit dem Brennkraftmaschinensteuergerät (15) verbunden ist und daß sie das Getriebe (5) auch in Abhängigkeit von Datensignalen, die über diese Datenleitung übermittelt werden, insbesondere in Abhängigkeit von der Drehzahl ($n_M$) der Motorwelle (6), ansteuert.

3. Antriebsaggregat nach Patentanspruch 2, dadurch gekennzeichnet, daß die Steuereinheit (16) des ersten Nebenaggregats (2) über die Datenleitung zum Brennkraftmaschinensteuergerät (15) Datensignale erfaßt, die drehzahlrelevante Betriebsinformationen ($L_{i\,(K,\,L)}$; $n_{i\,min}$, $n_{i\,opt(L)}$, $n_{i\,max\,(i=\,K,\,L)}$) über andere Nebenaggregate (3, 4) enthalten, und daß das Getriebe (5) von der Steuereinheit (16) auch in Abhängigkeit von diesen Betriebsinformationen angesteuert wird.

4. Antriebsaggregat nach einem der Patentansprüche 1 bis 3, dadurch gekennzeichnet, daß je eine minimal mögliche Drehzahl ($n_{i\,min}$), je eine lastanforderungsabhängige optimale Drehzahl ($n_{i\,opt(L)}$) und je eine maximal zulässige Drehzahl ($n_{i\,max}$) der Nebenaggregate (2, 3, 4 ; (**i**= G, K, L)) vorgegeben sind, und daß die Steuereinheit (16) das Getriebe (5) derart ansteuert, daß erstens die minimal möglichen Drehzahlen ($n_{i\,min}$) erreicht werden, wenn an alle Nebenaggregate (2, 3, 4) keine Lastanforderung ($L_i$) gestellt wird, daß zweitens eine Maximalauswahl aus den lastanforderungsabhängigen optimalen Drehzahlen ($n_{i\,opt(L)}$) vorgenommen wird, wenn mindestens an ein Nebenaggregat (2, 3, 4) eine Lastanforderung ($L_i$) gestellt wird, und daß drittens grundsätzlich keine Drehzahl erreicht wird, durch die auch nur eine der maximal zulässigen Drehzahlen ($n_{i\,max}$) der Nebenaggregate (2, 3, 4) überschritten wird.